Europäisches Patentamt

European Patent Office

Office européen des brevets

(19)

(11) Publication number: **0 679 699 A1**

## (12) EUROPEAN PATENT APPLICATION

(21) Application number: **95105068.1**

(22) Date of filing: **05.04.95**

(51) Int. Cl.6: **C09D 5/38**, C09D 133/02, C09D 133/08, C09D 167/00

(30) Priority: **29.04.94 US 236721**

(43) Date of publication of application:
**02.11.95 Bulletin 95/44**

(84) Designated Contracting States:
**AT BE CH DE ES FR GB IT LI LU NL SE**

(71) Applicant: **BASF CORPORATION**
**3000 Continental Drive North**
**Mount Olive,**
**New Jersey 08728-1234 (US)**

(72) Inventor: **Mowery, Michelle A.**
**1923 Terri Rue**
**Northwood,**
**Ohio 43619 (US)**

(74) Representative: **Münch, Volker, Dr.**
**BASF Lacke + Farben AG**
**Patente/Lizenzen/Dokumentation**
**Postfach 61 23**
**D-48136 Münster (DE)**

(54) **Polyether-siloxane paint additive.**

(57) Polyether modified dimethyl polysiloxane copolymers have been useful in refinish paint compositions. In particular the copolymers have been found useful in single stage modified oil alkyd acrylic enamel, acrylic metallic and solid resin systems.

EP 0 679 699 A1

FIELD OF THE INVENTION:

A solution of polyether modified dimethyl polysiloxane copolymer is used as a metal control agent in refinish paint compositions such as modified oil alkyd, acrylic anamel and acrylic resin systems. The resin system is especially useful in refinish paint compositions for metal control and final appearance of the paint.

BACKGROUND OF THE INVENTION:

The orientation of aluminum, and or surface appearance, is difficult to control without the film appearing blotchy or mottled in metallic as used in non metallic systems. This mottling is apparent in single stage as well as basecoat-clearcoat systems. Heavy or wet applications magnify the mottling appearance in both single stage and basecoat-clearcoat as do other systems and application parameters.

In the most recent past, fumed silica has been used to modify the metallic mottling, and to an extent the solid or non-metallic system, but with heavy or wet application, this mottling problem persists. The addition of a solution of a polyether modified dimethyl polysiloxane copolymer, such as BYK - 300, in the mentioned systems, reduces the mottling problem and, as the application becomes wetter, the usefulness of the invention becomes more apparent.

It is customary in the painting of an automobile that a series of coatings, be applied to the substrate. The first coat being the primer followed by the base coat and finally the clear coat. The base coat provides the good decorative quality to the final finish via organic and inorganic pigments. In many automobile finishes, a metallic finish is desired. To obtain this metallic effect, metallic pigments are present in the base coat typically aluminum flakes.

In the current market place, automobile coatings, especially base coats, contain a high level of organic solvent. With concern increasing about the volatile organic emissions into the atmosphere, an intensive effort in research and development in coatings containing mainly water as the solvent with a small level of organic solvent is under way. An example of such an effort is U.S. patent no. 4,730,020 which discloses a water-dilutable coating composition comprising specifically selected acrylic copolymers solvent blends, coloring and/or optical effect pigments and polymer dispersions. To obtain the desired optical effect of the metallic flakes, the correct combination of acrylic copolymer and solvent blend must be achieved. A thermosetting acrylic resin described by U.S. patent no. 3,862,071 controls the metallic pigment orientation by the addition of a water insoluble copolymer microgel technology as described by GB-PS No. 2,073,609 also results in the proper metal orientation. also disclosed in De No. 3,210,051 is an attempt to control metallic pigment orientation using polyurethane dispersions. Cellulosic in DE No. 3,216,549.

In general, the metal fixation in the aforementioned solvent base coats is achieved by a rheology modifiers such as inorganic and organic thickeners. All previous rheology modifiers or rheology control agents have poor shelve stability, poor weathering characteristics and are cumbersome to use. The particular rheology control agent used in this invention results in a non-mottled, high head-on-brightness, outstanding flop, and high quality finish, even in the case of a silver metallic base coat and does not suffer from the problems cited earlier.

Typically, coating compositions used in the automotive market, especially in the automotive after market, are produced by mixing various bases to give the desired color. These coating compositions are then applied in about 1-5 days after preparation.

SUMMARY OF THE INVENTION:

The invention relates to improved mottling in basecoat-clearcoat modified oil alkyd/acrylic enamel/acrylic metallic and solid resin systems. The invention is especially useful in the ambient temperature cure found in automotive refinish applications.

The invention also relates to improved mottling in single stage modified oil alkyd/acrylic enamel/acrylic metallic and solid resin systems. The invention is especially useful at ambient temperatures found in automotive refinish applications. Fumed silica may also be added to the selected resin system and results in a synergistic improvement in the mottling characteristics of the resultant paint composition.

DETAILED DESCRIPTION OF THE INVENTION

The invention relates to improve mottling in basecoat-clearcoat modified oil alkyd/acrylic enamel/acrylic metallic and solid resin systems. Polyether modified dimethyl polysioxane copolymer has been found especially useful for metal control in resin systems typically used in refinish paint. The invention is especially useful in the ambient temperature cure found in automotive refinish applications.

The invention also relates to improved mottling in single stage modified oil alkyd/acrylic enamel/acrylic metallic and solid resin systems. The invention is especially useful at ambient temperatures found in automotive refinish applications. Fumed silica may also be added to the selected resin system and results in a synergistic improvement in the mottling characteristics of the resultant paint composition.

The useful resin systems include any of those used in the field of refinish paint. Especially useful are refinish paint compositions such as alkyd, acrylic, acrylic enamel and sold as Supermax, Alpha-cryl, Select, and Limco Supreme Gold, manufactured and commercially available by BASF Corporation with the preferred resin system, such as Limco Supreme Gold Single Stage and or Limco Supreme Gold basecoat clearcoat, illustrate the unique qualities needed to control mottling and floatation problems found during heavy applications of these resin systems.

The invention can best be illustrated by the Examples that follow. In the Examples the following tests were utilized.

A. Sprayability/Mottling: No fromalized testing is recognized within the automotive industry so all testing was done in direct comparison to a control for evaluation. Spray outs were conducted in the lab at RT and varied % relative humidity. 1. Test panels were 4" x 12" x 1/8" on Taupe finished panels were sprayed by an expert in the research field and then evaluated by an expert color matcher for sprayability and mottling. 2. Test panels of 14" x 24" x 1/8" were sprayed out under lab conditions and again evaluated by an expert color matcher for sprayability and mottling. 3. Large automotive car hoods were sprayed in a downdraft booth at 75°F/65% RH by four professional painters and compared to a control. In each instance the invention was evaluated to have improved metal control, less mottling appearance and better or equal sprayable. Rating 10-excellent, 1-failure.

Subordinate tests were as follows:

A. Water Resistance:
two one milliliter deionized water drops were applied to panels that had been cured overnight and the panels were then placed in a 120°F oven until the water evaporated. One spot, wiped clean, was compared to an adjacent water spot and rated on a scale of 10 best-1 poor.

B. Print Resistance:
test panels cured overnight were placed into a 120°F oven for two minutes. A two square inch paper pad (1/2" thick) and 500 gram weight are placed on the test panels for 2 minutes. The panels were then removed from the oven and rated on a scale of 10 best - 1 poor.

C. Gasoline Resistance:
one 1 ml. unleaded gasoline was applied for five minutes at room temperature to test panels that had been cured overnight for 5 minutes at room temperature. The panels were then evaluated for film disturbance and recovery.

D. Adhesion Test:
Test panels cured overnight were cut through to the substrate with a crosshatch knife in perpendicular directions. An adhesive tape was secured firmly to the film then pulled away rapidly. Adhesion was rated on a scale of 10 best - 1 poor.

E. Humidity Resistance:
Test panels cured for one week were placed into a humidity cabinet (100°F, 100% R.H.) for 24 hours, removed for a 30 minute recovery then checked for adhesion. This cycle was repeated until 96 hours and 240 hours. Panels were rated on a scale of 10 best - 1 poor.

F. Water Spray:
Test panels cured for one week were placed into a water spray cabinet (72°F) for 48 hours followed by a 24 hr. recovery at room temperature. Panels were then checked for adhesion. This cycle was repeated 5 times and the panels rated on a scale of 10 best - 1 poor.

G. QUV (GM cycle, accelerated weathering:
Test panels cured for two weeks were placed into QUV (313 nonometer wavelength) after determining 20 degree gloss. Appearance and gloss were checked weekly and panels were rotated to ensure uniform exposure until failure.

The following examples were performed and tested by systems marketed by BASF and are available commercially. The LA-bases are oil modified alkyd or acrylic enamel systems. AT-bases are arylic systems. LR, LBR and PNT reducers are blends of aliphatic/aromatic/ester/alcohol blends that are also commercially available from BASF.

EXAMPLE 1

|  |  | by volume |
|---|---|---|
| LA1208 | Metallic Control | 173 |
| LA1219 | Black tinting base | 763 |
| LA1226 | Black tinting base | 62 |
|  | Additive | 2 |
| LBR1380 | Reducer blend | 1000 |

EXAMPLE 2

|  |  | by volume |
|---|---|---|
| LA1208 | Metallic control | 173 |
| LA1251 | White tinting base | 502 |
| LA1211 | Green tinting base | 215 |
| LA1219 | Black tinting base | 68 |
| LA1221 | Blue tinting base | 40 |

EXAMPLE 3

|  |  | by volume |
|---|---|---|
| LA1208 | Metallic control | 173 |
| LA1201 | White tinting base | 770 |
| LA1225 | Black tinting base | 42 |
| LA1211 | Green tinting base | 7 |
| LA1242 | Yellow tinting base | 6 |
|  | Additive | 2 |
| LBR1380 | Reducer blend | 1000 |

EXAMPLE 4

|  |  | by volume |
|---|---|---|
| LA1208 | Metallic control | 173 |
| LA1219 | Black tinting base | 377 |
| LA1221 | Blue tinting base | 126 |
| LA1250 | White tinting base | 44 |
| LA1260 | Fine aluminum tinting base | 23 |
| LA1236 | Red tinting base | 21 |
| LA1237 | Red iron oxide tinting base | 19 |
| LA1263 | Med aluminum tinting base | 17 |
| LA1200 | Fumed silica | 198 |
|  | Additive | 2 |
| LBR1380 | Reducer blend | 1000 |

EXAMPLE 5

|  |  | by volume |
|---|---|---|
| LA1208 | Metallic control | 173 |
| LA1263 | Aluminum tinting bases | 226 |
| LA1262 | Aluminum tinting bases | 262 |
| LA1242 | Yellow tinting bases | 67 |
| LA1219 | Black tinting bases | 17 |
| LA1237 | Red tinting bases | 13 |
| LA1200 | Fumed silica | 200 |
|  | Additive | 2 |
| LBR1380 | Reducer blend | 1000 |

EXAMPLE 6

|  |  | by volume |
|---|---|---|
| LA1208 | Metallic control | 173 |
| LA1261 | Aluminum tinting bases | 505 |
| LA1250 | White tinting bases | 58 |
| LA1260 | Aluminum tinting bases | 48 |
| LA1225 | Black tinting bases | 14 |
| LA1200 | Fumed silica | 200 |
|  | Additive | 2 |
| LBR1380 | Reducer blend | 1000 |

EXAMPLE 7

|  |  | by volume |
|---|---|---|
| LA1208 | Metallic control | 173 |
| LA1261 | Aluminum tinting bases | 324 |
| LA1221 | Blue tinting bases | 149 |
| LA1218 | Violet tinting bases | 81 |
| LA1216 | Aluminum tinting bases | 71 |
| LA1200 | Fumed silica | 200 |
|  | Additive | 2 |
| LBR1380 | Reducer blend | 1000 |

EXAMPLE 8

|  |  | by volume |
|---|---|---|
| LA1208 | Metallic control | 173 |
| LA1206 | White mica tinting base | 224 |
| LA1219 | Black tinting bases | 173 |
| LA1263 | Aluminum tinting bases | 173 |
| LA1218 | Violet tinting bases | 33 |
| LA1221 | Blue tinting bases | 22 |
| LA1200 | Fumed silica | 200 |
|  | Additive | 2 |
| LBR1380 | Reducer blends | 1000 |

EXAMPLE 9

|  |  | by volume |
|---|---|---|
| LA1208 | Metal control | 73 |
| LA1261 | Aluminum tinting bases | 165 |
| LA1221 | Blue tinting bases | 128 |
| LA1218 | Violet tinting bases | 41 |
| LA1219 | Black tinting bases | 41 |
| LA1204 | Single stage clearcoat | 350 |
|  | Additive | 2 |
| LR1282 | Reducer blend | 500 |

EXAMPLE 10

|  |  | by volume |
|---|---|---|
| LA1205 | Drier | 73 |
| AL1213 | Aluminum tinting bases | 300 |
| LA1238 | Transparent yellow oxide | 200 |
| LA1247 | Yellow tinting bases | 130 |
| LA1225 | Black tinting bases | 5 |
| LA1204 | Fumed silica | 290 |
|  | Additive | 2 |
| LR1282 | Reducer blend | 500 |

EXAMPLE 11

|  |  | by volume |
|---|---|---|
| AT143 | Black tinting base | 170 |
| AT1173 | Aluminum tinting base | 150 |
| AT192 | White tinting base | 60 |
| AT1112 | Aluminum tinting base | 50 |
| AT154 | Violet tinting base | 30 |
| AT129 | Green tinting base | 8 |
| AT104 | Fumed silica | 30 |
|  | Additive | 1 |
| PNT90 | Reducer blend | 622 |

The control formulas do not include the BYK 300 with all other components remaining the same.

| Gloss (20 degree meter): | 84°-88° |
|---|---|
| Humidity (100% R.H. for 96 hours, 100°F) | Excellent |
| Humidity (100% R.H. for 240 hours, 100°F) | Excellent |
| Adhesion: | Excellent |
| Water spray (72° for 48 hrs with 24 hrs. recovery) | Excellent |
| 5 cycles: | Excellent |
| Gasoline Resist: | Excellent |
| Water Spot: | Excellent |
| Print: | Excellent |
| Q.U.V. (313 nanometer, GM Cycle) | Excellent |

EXAMPLE 12

The following two tables list the results of Examples 1 - 11.

| RESULTS OF MOTTLING EVALUATION | | | | | | | | | | | |
|---|---|---|---|---|---|---|---|---|---|---|---|
| RESULTS | EX 1 | EX 2 | EX 3 | EX 4 | EX 5 | EX 6 | EX 7 | EX 8 | EX 9 | EX10 | EX11 |
| CONTROL | 8 | 8 | 8 | 8 | 7 | 7 | 7 | 7 | 7 | 6 | 6 |
| INVENTION | 10 | 10 | 10 | 10 | 10 | 10 | 10 | 10 | 10 | 9 | 9 |

The above results are using the preceding examples: Control (without additive invention) and with the additive of the invention. These results were judged by experts in the automotive refinish field and spray application experts for mottling and or metallic floatation. In each case 10 = best appearance; 1 = poorest appearance.

RESULTS OF SUBORDINATE TESTS

| Result | EX 1 | EX 2 | EX 3 | EX 4 | EX 5 | EX 6 | EX 7 | EX 8 | EX 9 | EX 10 | EX 11 |
|---|---|---|---|---|---|---|---|---|---|---|---|
| Humidity 96H /control | 10/10 | 10/10 | 10/10 | 10/10 | 10/10 | 10/10 | 10/10 | 10/10 | 10/10 | 10/10 | 10/10 |
| Humidity 240H /control | 9/8 | 9/8 | 9/8 | 9/8 | 9/8 | 9/8 | 9/8 | 9/8 | 9/8 | 9/8 | 9/8 |
| Adhesion /control | 10/9 | 10/9 | 10/9 | 10/10 | 10/10 | 10/10 | 10/10 | 10/10 | 10/10 | 10/9 | 10/9 |
| Water Spray /control | 10/10 | 10/10 | 10/10 | 10/10 | 10/10 | 10/10 | 10/10 | 10/10 | 10/10 | 10/10 | 10/10 |
| Gloss 20° /control | 88/87 | 88/86 | 88/86 | 87/86 | 87/86 | 88/85 | 87/85 | 86/86 | 88/85 | 85/85 | 83/83 |
| ...oline /control | pass/ pass | pass/ pass | pass/ pass | pass/ pass | pass/ pass | pass/ pass | pass/ pass | pass/ pass | pass/ pass | pass/ pass | pass/ pass |
| Water spot /control | 10/10 | 10/10 | 10/10 | 10/10 | 10/10 | 10/10 | 10/10 | 10/10 | 10/10 | 10/10 | 10/10 |
| Print /control | 10/10 | 10/10 | 10/10 | 10/10 | 10/10 | 10/10 | 10/10 | 10/10 | 10/10 | 10/10 | 10/10 |
| QUV 313 /control | 1000/ 1000 | 1000 /1000 | 1000 /1000 | 1000 /1000 | 1000 /1000 | 1000 /1000 | 1000 /1000 | 1000 /1000 | 1000 /1000 | 1000 /1000 | 1000 /1000 |

These results are for the examples 1-11 with the */ being the results from each specified test for the Example with the additive invention. The /* are the results for the specified tests for the control (without additive invention).

## Claims

1. An automotive basecoat-clearcoat paint composition wherein the basecoat contains a polyether modified dimethyl polysiloxane copolymer as metal control agent.

2. The paint composition of claim 1 wherein the basecoat comprises a oil alkyd resin.

3. The paint composition of claim 1 wherein the basecoat comprises an acrylic enamel.

4. The paint composition of claim 1 wherein the basecoat comprises an acrylic metallic resin.

5. The paint composition of claim 1 wherein the basecoat comprises a solid resin system.

6. A single stage refinish paint composition comprising a polyether modified dimethyl polysiloxane copolymer addition.

7. The paint composition of claim 6 wherein the basecoat comprises a oil alkyd resin.

8. The paint composition of claim 6 wherein the basecoat comprises an acrylic enamel.

9. The paint composition of claim 6 wherein the basecoat comprises an acrylic metallic resin.

10. The paint composition of claim 6 wherein the basecoat comprises a solid resin system.

European Patent Office

**EUROPEAN SEARCH REPORT**

Application Number

EP 95 10 5068

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 281 936 (BASF)<br>* claim 1 *<br>--- | 1 | C09D5/38<br>C09D133/02<br>C09D133/08<br>C09D167/00 |
| A | EP-A-0 468 293 (BASF CORP)<br>* page 7, line 42 - line 50 *<br>----- | 1 | |

TECHNICAL FIELDS
SEARCHED      (Int.Cl.6)

C09D

The present search report has been drawn up for all claims

| Place of search | Date of completion of the search | Examiner |
|---|---|---|
| THE HAGUE | 25 July 1995 | Lentz, J |

EPO FORM 1503 03.82 (P04C01)